# EUROPÄISCHE PATENTSCHRIFT

(11) **EP 1 464 532 B1**
(45) Veröffentlichungstag und Bekanntmachung des Hinweises auf die Patenterteilung: **26.05.2010**
(21) Anmeldenummer: 04005061.9
(22) Anmeldetag: 04.03.2004
(51) Int. Cl.: B60L 7/24, B60L 7/18

(54) **Bremssystem für ein batteriebetriebenes Flurförderzeug**
Brake system for a battery operated ground conveyor
Système du frein pour un chariot convoyeur à piles

(30) Priorität: 04.04.2003 DE 10315297
(43) Veröffentlichungstag der Anmeldung: 06.10.2004
(73) Patentinhaber: Jungheinrich Aktiengesellschaft, 22047 Hamburg (DE)
(72) Erfinder: Hüther, Sebastian, 22307 Hamburg (DE); Mänken, Frank, 24558 Henstedt-Ulzburg (DE); Nissen, Nis-Georg, 24616 Brokstedt (DE)
(74) Vertreter: Hauck Patent- und Rechtsanwälte

(56) Entgegenhaltungen:
- DE-A1- 4 434 328
- US-A- 3 868 150
- US-A- 5 476 310
- US-A- 5 511 859

## Beschreibung

Die Erfindung bezieht sich auf ein batteriebetriebenes Flurförderzeug mit Bremssystem nach dem Patentanspruch 1.

Derartige Flurförderzeuge weisen zumeist ein von einem elektrischen Motor angetriebenes Antriebsrad auf sowie mitlaufende Lasträder. Es ist bekannt, sowohl dem Antriebsrad als auch den Lasträdern Bremsen zuzuordnen. Die Bremse für das Antriebsrad kann auch unmittelbar dem Antriebsmotor zugeordnet werden. Es ist bekannt, für die beschriebenen Bremsen hydraulische Trommelbremsen einzusetzen. Für die Antriebsmotoren ist auch bekannt, federkraftbelastete Einscheiben-Magnetbremsen zu verwenden. Diese sind meist als sogenannte "Fail-Safe"-Bremsen ausgelegt, weil vorgeschrieben ist, daß bei Ausfall einer elektrischen Lenkung, wie sie vielfach für derartige Flurförderzeuge verwendet wird, das Fahrzeug geregelt abgebremst werden muß.

Für mit Drehstrommotor versehene Flurförderzeuge ist auch bekannt, generatorisch mit Hilfe des Antriebsmotors abzubremsen. Man kann mit Hilfe der generatorisch erzeugten Bremswirkung eine "Ausrollbremse" realisieren, wie etwa in DE 196 29 386 C1 offenbart. In diesem Stand der Technik wird auch die Verwendung von Sollwertrampen in Abhängigkeit von der Bremspedalstellung beschrieben.

Aus EP 0 908 348 ist bekannt, mit Hilfe des Antriebsmotors ein belastungsunabhängiges Bremsverhalten zu erzielen. Für die Drehzahlregelung des Antriebsmotors wird ein identischer Bremsweg vorgegeben, welcher zur Auslenkung des Bremspedals proportional ist. Es werden Drehzahlsollwertrampen vorgegeben, welche je nach Pedalstellung gewählt werden. Lastradbremsen, die im bekannten Fall ebenfalls vorgesehen sind, werden ab einer bestimmten Pedalstellung zugeschaltet.

Aus US 5,511,859 ist regeneratives elektrisches Bremsen bekannt.

Aus EP 0 814 051 B1 ist bekannt, bei einem Flurförderzeug mindestens eine bremsbare und mindestens eine nicht bremsbare Achse vorzusehen, wobei eine Steuereinheit ein veränderliches, die zulässige Maximalgeschwindigkeit des Flurförderzeugs festlegendes Steuersignal erzeugt. Das Steuersignal wird mittels der Steuereinheit in Abhängigkeit von der Fahrtrichtung des Flurförderzeugs derart verändert, daß bei Fahrt in Richtung der bremsbaren Achse, eine höhere Maximalgeschwindigkeit zugelassen ist, als bei Fahrt in Richtung der nicht bremsbaren Achse.

Aus EP 0758591 A1 ist bekannt geworden, mit Hilfe eines Bremssignalgebers, der vom Bremspedal betätigt wird, ein elektrisches Bremssignal zu erzeugen. Das Bremssignal wird der Motorsteuerung zugeführt, die das Ausmaß der Energierückgewinnungsmöglichkeit vorgibt. Daraus ergibt sich das Ausmaß der generativen Abbremsung. Da das vom Motor erzeugte Bremsmoment häufig nicht ausreicht, die gewünschte Abbremsung zu gewährleisten, ist ein Verzögerungssensor vorgesehen, der die Bremsverzögerung mißt und ein Signal für ein Bremssystem erzeugt, das nach Maßgabe des Defizits der motorischen Bremsung eine mechanische Bremskraft erzeugt, damit das gewünschte Bremsverhalten erzielt wird.

Der Erfindung liegt die Aufgabe zugrunde, ein Flurförderzeug mit Bremssystem zu schaffen, mit dem ein verschleißarmer Bremseinsatz erzielt werden kann. Das Bremsverhalten soll dem einer hydraulischen Bremse angenähert sein. Diese Aufgabe wird durch die Merkmale des Patentanspruchs 1 gelöst.

Beim erfindungsgemäßen Bremssystem wird mit Hilfe des Bremspedals in bekannter Weise ein Bremssignal erzeugt. Das Bremssignal wird in eine Bremssollkraft gewandelt, die in die Steuervorrichtung für den Antriebsmotor gegeben wird. Dort rechnet eine erste Umrechnungseinheit das Bremssignal in ein Soll-Drehmoment für den Antriebsmotor um. Mit Hilfe der Fahrsteuerung wird vom Antriebsmotor drehzahlabhängig ein Bremsmoment erzeugt, das naturgemäß begrenzt ist entsprechend der Drehzahl-Momenten-Kennlinie des Antriebsmotors. Mit Hilfe einer zweiten Umrechnungseinheit wird das tatsächliche erzielbare Ist-Drehmoment des Antriebsmotors in eine Ist-Bremskraft umgerechnet. Die Ist-Bremskraft wird verglichen mit der ersten Soll-Bremskraft zur Erzeugung einer zweiten Soll-Bremskraft, welche die Bremskraft für die zweite Bremsvorrichtung vorgibt.

Bei dem erfindungsgemäßen Flurförderzeug mit Bremssystem wird die vom Antriebsmotor zu erbringende Bremskraft jeweils ergänzt durch die Bremsvorrichtung an den Lasträdern. Die am Antriebsrad oder am Antriebsmotor vorgesehene Bremsvorrichtung kommt lediglich in bestimmten Fällen zum Einsatz, worauf weiter unten noch eingegangen wird.

Das erfindungsgemäße Flurförderzeug mit Bremssystem hat etliche Vorteile. Der Antriebsmotor wird optimal ausgenutzt, während die Lastradbremsen nur bei Bedarf eingesetzt werden. Die Abbremsung über den Antriebsmotor ist weitgehend verschleißfrei. Somit wird ein weitgehend verschleißarmer Bremsbetrieb erzielt. Das erfindungsgemäße Bremssystem verhält sich wie eine hydraulische Bremse, indem das Bremspedal proportional zu seiner Feststellung ein Bremsmoment erzeugt. Die Nachteile hydraulischer Bremsen werden hingegen vermieden, nämlich der größere Verschleiß und die schwierige Fehlererkennung bei Bruch einer Bremsleitung.

Bei dem erfindungsgemäßen Flurförderzeug mit Bremssystem sind die Lastradbremsen elektrische Bremsen. Daher sieht die Erfindung vor, daß eine dritte Umrechnungseinheit vorgesehen ist, die die zweite Soll-Bremskraft in einen Bremsstrom umwandelt. Ein Stromregler gibt nach Maßgabe der Strombremskraftkennlinie die zweite Soll-Bremskraft für die zweite Bremsvorrichtung vor. Die Kennlinie kann je nach Anforderung linear, progressiv oder degressiv sein. Sie sorgt dafür, daß das Gesamtbremsverhalten des Fahrzeugs dem Systemverhalten und/oder dem Bedienerwunsch angepaßt werden kann.

Wie schon erwähnt, dient die Antriebsradbremse bzw. die der Welle des Motors zugeordnete Bremse nur für bestimmte Einsatzfälle. Nach der Erfindung ist vorgesehen, daß die Bremssteuervorrichtung ein Vollbremssignal für die erste Bremsvorrichtung erzeugt, wenn das Bremssignal des Bremssignalgebers maximal ist. In diesem Fall wird die erste Bremsvorrichtung bei einer Vollbremsung zugeschaltet. Alternativ kann die erste Bremsvorrichtung auch als reine Haltebremse im Stillstand des Flurförderzeugs oder an Steigungen eingesetzt werden.

Nach einer anderen Ausgestaltung der Erfindung kann die erste Bremsvorrichtung auch in dem Fall angesteuert werden, wenn eine Überwachungsvorrichtung ein Fehlersignal meldet. So kann beispielsweise ein Leitungsbruch in der Signalübermittlung der elektrischen Bremse festgestellt werden. Dies betrifft auch den Fall, daß das Flurförderzeug eine elektrische Lenkung aufweist. In diesem Falle ist vorgeschrieben, daß eine Sofortabbremsung erfolgen muß, wenn die elektrische Lenkung defekt ist.

In einer Ausgestaltung der Erfindung ist ferner vorgesehen, daß das Vollbremssignal über ein Zeitverzögerungsglied auf die erste Bremsvorrichtung gegeben wird. Damit kann ein abruptes Bremsen mit Hilfe der ersten Bremsvorrichtung vermieden werden, was insbesondere bei bestimmten Lastzuständen und Hubhöhen nachteilig ist, weil dadurch die Sicherheit des Flurförderzeugs beeinträchtigt wird.

Es ist auch denkbar, das Bremsverhalten des erfindungsgemäßen Bremssystems von bestimmten Fahrzeug- bzw. Fahrparametern abhängig zu machen, beispielsweise einen die aufgenommene Last sensierenden Belastungssensor vorzusehen, dessen Signal auf die Bremssteuerung gegeben wird. Ebenso kann ein Fahrtrichtungssensor vorgesehen werden. Dadurch wird z. B. vermieden, daß in einer Kurve oder bei Schrägfahrt bei einem Flurförderzeug die Abbremsung zu einem instabilen Zustand des Fahrzeugs führt. Das gleiche trifft auch zu für die Einbeziehung der Hubhöhe, die mit Hilfe eines Hubhöhensensors gemessen werden kann.

Ein Ausführungsbeispiel der Erfindung wird nachfolgend anhand einer Zeichnung näher erläutert.

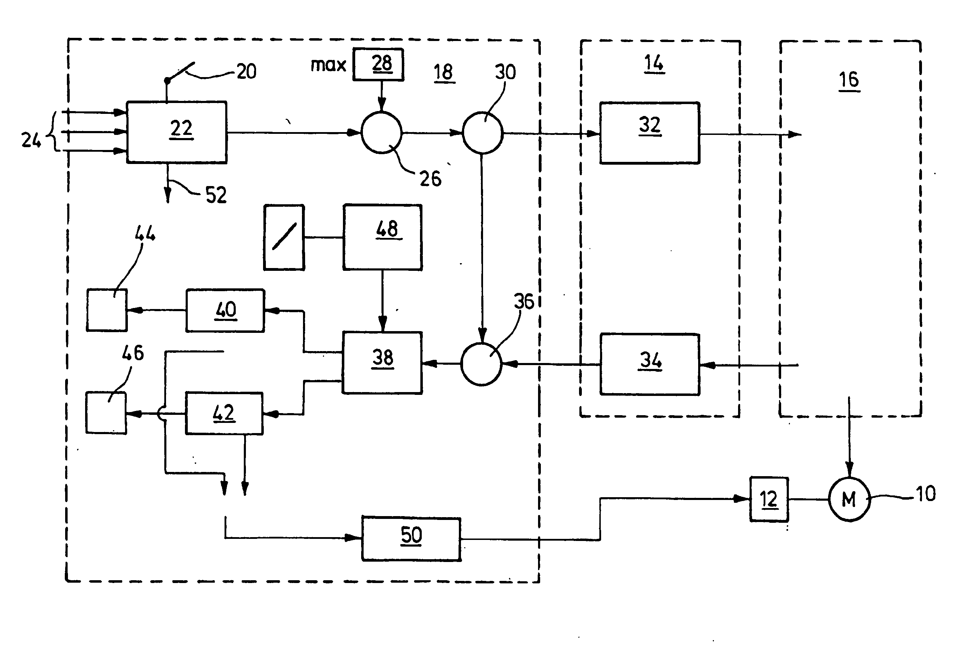

Die einzige Figur zeigt ein Blockdiagramm des Bremssystems nach der Erfindung.

In der Figur ist ein Drehstrommotor gezeigt, der ein nicht gezeigtes Antriebsrad eines Flurförderzeugs antreibt. Dem nicht gezeigten Antriebsrad ist eine erste Bremsvorrichtung 12 zugeordnet. Die Bremsvorrichtung 12 kann auch der Welle des Antriebsmotors 10 zugeordnet sein. Eine im einzelnen nicht erläuterte Fahrsteuerung für den von einer Batterie betriebenen Drehstrommotor 10 ist in den gestrichelt gezeichneten Blöcken 14, 16 untergebracht. Eine Bremssteuerung 18 ist in dem weiteren gestrichelt gezeichneten Block untergebracht. Ein Bremspedal 20 im nicht gezeigten Flurförderzeug wird vom Bediener betätigt. Ein Bremssignalgeber, der vom Bremspedal 20 betätigt wird, ist in einem Block 22 untergebracht. In dem Block 22 ist auch eine Überwachungsvorrichtung untergebracht, auf die weiter unten noch eingegangen wird. Über die Pfeile 24 werden einzelne Funktionssignale für den Block 22 eingegeben, was jedoch für den Betrieb des beschriebenen Bremssystems nicht von Bedeutung ist.

Auf eine Vergleichsvorrichtung 26 wird ein Signal von dem Bremssignalgeber 22 gegeben, das einer Soll-Bremskraft proportional ist. Diese Bremskraft ist diejenige, mit der das Fahrzeug nach Maßgabe der Bremspedalstellung abgebremst werden soll. In die Vergleichsvorrichtung 26 wird auch ein der maximalen Bremskraft proportionales Signal eingegeben. Dies geschieht über den Block 28. Die Soll-Bremskraft wird über einen Abzweigpunkt 30 auf eine erste Umrechnungseinheit 32 in der Fahrsteuerung gegeben und zwar im Block 14. Die Umrechnungseinheit 32 errechnet aus der Soll-Bremskraft ein Drehmoment für den Antriebsmotor 10. Eine zweite Umrechnungseinheit 34 errechnet aus dem Ist-Moment des Motors 10 eine Ist-Bremskraft. Das Motormoment, das über die Bremskraftvorgabe eingestellt wird, ist in vielen Fällen kleiner als für das gewünschte Bremsverhalten erforderlich. In einer zweiten Vergleichsvorrichtung 36 wird die Soll-Bremskraft vom Bremssignalgeber 22 mit der Ist-Bremskraft von der Umrechnungseinheit 34 verglichen. Die Restbremskraft wird in einer weiteren Umrechnungseinheit 38 in einen Bremsstrom für einen ersten und zweiten Bremsregler 40 bzw. 42 umgewandelt. Die Regler 40, 42 können PI-Regler sein. Nach Maßgabe des Stromes der Regler 40 ,42 wird in Lastradbremsen 44, 46 eine Bremskraft bzw. ein Bremsmoment erzeugt. In einem Speicherblock 48 sind Parameter für die Nennbremskraft bzw. den Nennbremsstrom gespeichert, die auf die Umrechnungseinheit 38 gegeben werden.

Die Ansteuerung der ersten Bremsvorrichtung am Antriebsrad weist einen Regler 50 auf. Er wird angesteuert z. B. bei Feststellung eines Kabelbruchs oder sonstiger Fehler im Bremssystem. Eine entsprechende Überwachungsvorrichtung ist im Block 22 untergebracht. Der Ausgang für den Regler 50 ist mit 52 bezeichnet. In den Reglern 40, 42 sind ebenfalls Überwachungen integriert, die bei einer Fehlermeldung ein Signal für einen Notstopp auf den Regler 50 geben. Der Regler 50 erzeugt stets ein Vollbremssignal für die Bremsvorrichtung 12, wobei dieses Signal aber über eine entsprechende Rampe zeitverzögert zur Wirkung kommen kann. Eine Vollbremsung kann auch vorgenommen werden, wenn andere gemessene Parameter eine Vollbremsung angezeigt sein lassen. Es ist dabei auch denkbar, die Lastradbremsen 44, 46 bei einer Vollbremsung zuzuschalten.

## Patentansprüche

1. Batteriebetriebenes Flurförderzeug mit mindestens einem Antriebsrad und Lasträdern, mit einem Drehstromantriebsmotor (10), der das Antriebsrad antreibt, einer der Welle des Drehstromantriebsmotor (10) zugeordneten ersten Bremsvorrichtung (12), Lasträdern, denen eine elektrische zweite Bremsvorrichtung zugeordnet ist, einem Bremspedal (20), dem ein Bremssignalgeber (22) zugeordnet ist zur Erzeugung eines einer ersten Bremssollkraft entsprechenden elektrischen Soll-Bremssignals nach Maßgabe der Auslenkung des Bremspedals (20), einer Steuervorrichtung (14, 16) für den Antriebsmotor (10), einer ersten Umrechnungseinheit (32) in der Steuervorrichtung, die das Soll-Bremssignal in ein Soll-Drehmoment für den Antriebsmotor (10) umrechnet, einer zweiten Umrechnungseinheit (34) in der Steuervorrichtung, die das Ist-Drehmoment des Antriebsmotors (10) in ein der Ist-Bremskraft entsprechendes Ist-Bremssignal umrechnet, einer Vergleichseinrichtung (36) in einer Bremssteuerung (18), in der das Soll-Bremssignal mit dem Ist-Bremssignal verglichen wird zur Bildung eines zweiten Soll-Bremssignals für die zweite elektrische Bremsvorrichtung (44, 46) und einer dritten Umrechnungseinheit (38), die das zweite Soll-Bremssignal in einen Bremsstrom umwandelt, wobei ein Stromregler (40, 42) nach Maßgabe einer Strombremskraftkennlinie die zweite Soll-Bremskraft für die zweite Bremsvorrichtung (44, 46) vorgibt, und wobei
die Steuervorrichtung (14) ein Vollbremssignal für die erste Bremsvorrichtung (12) erzeugt, wenn das Bremssignal des Bremssignalgebers maximal wird.

2. Bremssystem nach Anspruch 1, **dadurch gekennzeichnet, daß** die Bremssteuervorrichtung (18) ein Vollbremssignal für die erste Bremsvorrichtung (12) erzeugt, wenn eine Überwachungsvorrichtung ein Fehlersignal bezüglich der zweiten Bremsvorrichtung (44, 46), der Lenkung des Flurförderzeugs oder des Bremssignals (20) erhält.

3. Bremssystem nach Anspruch 1 oder 2, **dadurch gekennzeichnet, daß** das Vollbremssignal über ein Zeitverzögerungsglied auf die erste Bremsvorrichtung (12) gegeben wird.

4. Bremssystem nach einem der Ansprüche 1 bis 3, **dadurch gekennzeichnet, daß** das Flurförderzeug einen Fahrtrichtungssensor und/oder einen die aufgenommene Last sensierenden Belastungssensor aufweist, dessen Signale in die Bremssteuervorrichtung gegeben werden und die Bremssteuervorrichtung die zweite Soll-Bremskraft in Abhängigkeit von der Fahrtrichtung und/oder der Belastung ändert.

5. Bremssystem nach einem der Ansprüche 1 bis 4, **dadurch gekennzeichnet, daß** das Flurförderzeug einen Hubhöhensensor aufweist, dessen Signal auf die Bremssteuervorrichtung gegeben wird und die zweite Soll-Bremskraft in Abhängigkeit von der Hubhöhe geändert wird.

## Claims

1. Battery-powered industrial truck comprising at least one driving wheel and load-carrying wheels, a three-phase driving motor (10) which drives the driving wheel, a first braking device (12) associated with the shaft of the three-phase driving motor (10), load-carrying wheels, to which an electric second braking device is associated, a brake pedal (20) with which a braking signal generator (22) is associated to generate an electric braking signal corresponding to a first desired braking force in response to the excursion of the brake pedal (20), a control device (14, 16) for the driving motor (10), a first conversion unit (32) in the control device which converts said desired braking signal into a desired torque for the driving motor (10), a second conversion unit (34) in the control device which converts the actual torque of the driving motor (10) into an actual braking signal corresponding to the actual braking force, a comparator device (36) in a braking control (18) in which the desired braking signal is compared to the actual braking signal to form a second desired braking signal for the second electric braking device (44, 46) and a third conversion unit (38) which transforms the second desired braking signal into a braking current wherein a current regulator (40, 42) predetermines said second desired braking force for the second braking device (44, 46) in response to a current braking force characteristic, and wherein the brake control device (14) generates a hard stop signal for said first braking device (12) when the braking signal of said braking signal generator becomes a maximum.

2. The braking system as claimed in claim 1, **characterized in that** the brake control device (18) generates a hard stop signal for said first braking device (12) when a monitoring device receives an error signal with regard to said second braking device (44, 46), the steering of the industrial truck or said braking signal (20).

3. The braking system as claimed in claim 1 or 2, **characterized in that** said hard stop signal is provided to said first braking device (12) via a time delay member.

4. The braking system as claimed in any one of claims 1 to 3, **characterized in that** the industrial truck has a travel direction sensor and/or a load sensor sensing the load imposed the signals of which are inputted to the brake control device and said brake control device varies the second desired braking force in dependence on the direction of travel and/or the load.

5. The braking system as claimed in any one of claims 1 to 4, **characterized in that** the industrial truck has a lifting height sensor the signal of which is provided to said brake control device and the second desired braking force is varied in dependence on said lifting height.

## Revendications

1. Chariot convoyeur à piles avec au moins une roue motrice et des roues de charge, avec un moteur de propulsion à courant triphasé (10) qui entraîne la roue motrice, un premier dispositif de freinage (12) attribué à l'arbre du moteur de propulsion à courant triphasé (10), des roues de charge auxquelles un deuxième dispositif électrique de freinage est attribué, une pédale de freinage (20) auquel est attribué un avertisseur de freinage (22) pour générer un signal de consigne de freinage électrique correspondant à une première force de consigne de freinage au prorata de la course de la pédale de freinage (20), un module de commande (14, 16) pour le moteur de propulsion (10), une première unité de conversion (32) dans le module de commande qui convertit le signal de consigne de freinage en un couple de consigne pour le moteur de propulsion (10), une deuxième unité de conversion (34) dans le module de commande qui convertit le couple réel du moteur de propulsion (10) en un signal de freinage réel correspondant à la force de freinage réelle, un dispositif de comparaison (36) dans une régulation de freinage (18) dans lequel le signal de consigne de freinage est comparé avec le signal de freinage réel afin de générer un deuxième signal de consigne de freinage pour le deuxième dispositif électrique de freinage (44, 46), et avec une troisième unité de conversion (38) qui transforme le deuxième signal de consigne de freinage en un courant de freinage, un régulateur de courant (40, 42) fixant la deuxième force de consigne de freinage pour le deuxième dispositif de freinage (44, 46) au prorata d'une courbe caractéristique courant électrique - force de freinage, et le module de commande (14) générant un signal de freinage à bloc pour le premier dispositif de freinage (12) quand le signal de freinage de l'avertisseur de freinage devient maximal.

2. Système du frein selon la revendication 1, **caractérisé en ce que** la régulation de freinage (18) génère un signal de freinage à bloc pour le premier dispositif de freinage (12) quand un dispositif de surveillance reçoit un signal d'erreur concernant le deuxième dispositif de freinage (44, 46), le système de direction du chariot convoyeur ou le signal de freinage (20).

3. Système du frein selon la revendication 1 ou 2, **caractérisé en ce que** le signal de freinage à bloc est donné au premier dispositif de freinage (12) via un élément de délai.

4. Système du frein selon l'une quelconque des revendications 1 à 3, **caractérisé en ce que** le chariot convoyeur présente un senseur pour la direction de marche et/ou un senseur de charge qui enregistre la charge ramassée, dont les signaux sont donnés à la régulation de freinage, et la régulation de freinage change la deuxième force de consigne de freinage en fonction de la direction de marche et/ou de la charge.

5. Système du frein selon l'une quelconque des revendications 1 à 4, **caractérisé en ce que** le chariot convoyeur présente un senseur pour la hauteur de levage, dont le signal est donné à la régulation de freinage, et la deuxième force de consigne de freinage est changée en fonction de la hauteur de levage.
